# EUROPÄISCHE PATENTSCHRIFT

(11) **EP 0 799 740 B1**
(45) Veröffentlichungstag und Bekanntmachung des Hinweises auf die Patenterteilung: **16.02.2005**
(21) Anmeldenummer: 97102860.0
(22) Anmeldetag: 21.02.1997
(51) Int. Cl.: B60K 23/08, B60K 28/16

(54) **Verfahren zum Steuern einer steuerbaren Kupplung eines Kraftfahrzeuges mit Vierradantrieb**
Method for controlling a controllable clutch of a four-wheel drive vehicle
Procédé de commande d'un embrayage réglable pour un véhicule à quatre roues motrices

(30) Priorität: 06.04.1996 DE 19613841
(43) Veröffentlichungstag der Anmeldung: 08.10.1997
(73) Patentinhaber: Volkswagen Aktiengesellschaft, 38436 Wolfsburg (DE)
(72) Erfinder: Babbel, Eckhard, Dipl.-Ing., 38100 Braunschweig (DE); Gabrisch, Roman, Dipl.-Ing., 38518 Gifhorn (DE)
(74) Vertreter: Hübsch, Dirk, Dipl.-Ing.

(56) Entgegenhaltungen:
- EP-A- 0 298 397
- EP-A- 0 393 596
- DE-A- 3 928 903
- DE-A- 3 942 411
- DE-A- 4 137 036
- DE-A- 4 202 026
- DE-C- 3 721 626
- US-A- 5 461 568
- PATENT ABSTRACTS OF JAPAN vol. 015, no. 160 (M-1105), 22. April 1991 & JP 03 031031 A (NISSAN MOTOR CO LTD), 8. Februar 1991
- PATENT ABSTRACTS OF JAPAN vol. 016, no. 343 (M-1285), 24. Juli 1992 & JP 04 103433 A (NISSAN MOTOR CO LTD), 6. April 1992

## Beschreibung

Die Erfindung bezieht sich auf ein Verfahren zum Steuern einer steuerbaren Kupplung im Antriebsstrang zwischen einer Vorderachse und einer Hinterachse eines Kraftfahrzeuges mit Vierradantrieb, bei dem jedem der Räder ein Raddrehzahlsensor zugeordnet ist, dessen Ausgangssignal einer Auswerteeinheit mit Datenspeicher zugeführt wird.

Ein Verfahren gemäβ dem Oberbegriff des Anspruchs 1 ist beispielsweise aus US 5 461 568 bekannt.

Eine derartige Steuerung ist z. B. aus der deutschen Patentschrift DE 37 21 626 C2 bekannt. Bei der oben genannten Lösung wird die Raddrehzahl über Raddrehzahlsensoren ermittelt. Überschreitet die zeitliche Ableitung der Verzögerung einen vorbestimmten Wert, wirkt ein Stellglied im Sinne einer Verringerung des übertragenen Momentes auf die Kupplung ein. Eine derartige Steuerung verbessert somit lediglich das Bremsverhalten, Ausnahmesituationen, z. B. das Durchdrehen der Räder, werden nicht erfaßt. Weiterhin können bei einer Kurvenfahrt Verspannungen in der Kupplung auftreten, da die Drehzahldifferenzen in der Kupplung aufgrund von unterschiedlichen Raddrehzahldifferenzen bei einer Kurvenfahrt bzw. aufgrund von unterschiedlichen Radradien unberücksichtigt bleiben.

Aus der deutschen Offenlegungsschrift DE 43 27 507 A1 ist eine Weiterentwicklung für schwere Fahrzeuge in schwierigem Gelände angegeben. Hier sind jedoch jeweils eine Sperrkupplung für das Vorder- und Hinterachsdifferential sowie eine schaltbare Kupplung zwischen Vorder- und Hinterachse vorgesehen.

Aus der deutschen Patentschrift DE 35 04 455 C3 ist eine Steuerung von drei Sperrdifferentialen für ein Straßenfahrzeug angegeben. Bei dieser Steuerung sind nur die Stellungen "Sperrdifferential gesperrt" sowie "Sperrdifferential entsperrt" vorgesehen. Zwischenstellungen zum Einstellen eines Grundübertragungsmomentes in den Sperrdifferentialen sind nicht vorgesehen.

Der Erfindung liegt nun die Aufgabe zugrunde eine Kupplung zwischen der Vorder- und der Hinterachse eines vierradgetriebenen Fahrzeuges derart zu steuern, daß Verspannungen in der Kupplung vermieden werden und für Ausnahmefahrsituationen Regeln für das Öffnen bzw. Schließen zu geben.

Die Aufgabe wird durch die Merkmale des Anspruchs 1 gelöst. Vorteilhafte Aus- und Weiterbildungen sind in den Unteransprüchen gegeben.

Diese Aufgabe wird erfindungsgemäß dadurch gelöst, daß eine theoretische Drehzahldifferenz zwischen beiden Kupplungshälften, die sich für den radschlupffreien Fahrbetrieb ergeben würde, für eine Grundfahrsituation errechnet wird, diese in ein Steuersignal umgewandelt wird und mit diesem Signal eine steuerbare Kupplung zwischen der Vorder- und der Hinterachse eines vierradgetriebenen Fahrzeuges derart gesteuert wird, daß ein vorzugebendes Grundübertragungsmoment in der Kupplung übertragen wird.

Die theoretische Drehzahldifferenz in der Kupplung für den radschlupffreien Fahrbetrieb wird aus dem Kurvenradius, der Fahrgeschwindigkeit und den unterschiedlichen Radradien berechnet. Die unterschiedlichen Radradien können z. B. durch Vergleich der über einen längeren Zeitraum erfaßten und gemittelten Raddrehzahlen oder durch Messen der Drehzahldiffernzen bei einer radschlupffreien Geradeausfahrt ermittelt werden. Der Kurvenradius kann z. B. durch ein Lenkwinkelsensor gemessen werden oder durch geeignete Rechenregeln empirisch ermittelt werden. Werden durch geeignete Mittel vorzugsweise durch Raddrehzahlsensoren oder eines Motorsteuergerätes Ausnahmefahrsituationen durch Über- oder Unterschreiten von Grenzwerten der Signale sensiert, so wird erfindungsgemäß vorgeschlagen, die Kupplung nach Abfrage von im Datenspeicher abgelegten Abfragealgorithmen, zu öffnen bzw. zu schließen.

Liegt eine Ausnahmefahrsituation, wie z. B. eine Bremsung, vor, so schlägt die Erfindung eine Steuerung der Kupplung nach Unteranspruch 3 vor. Durch die Öffnung der Kupplung wird ein Stabilitätsverlust bei einer µ-Split-Bremsung oder einer ABS-Bremsung vermieden. Für die Ausnahmefahrsituation "Durchdrehen der Räder" bzw. "Lastwechsel" werden die Abfragefolgen nach den Unteransprüchen 4 und 5 mit entsprechendem Schließen bzw. Öffnen der Kupplung vorgeschlagen.

Für den Fall, daß nicht alle Raddrehzahlsensoren Raddrehzahlen oberhalb eines Grenzwertes sensieren, oder zumindest einer der Raddrehzahlsensoren kein Signal abgibt, werden erfindungsgemäß die Abfragefolgen nach den Unteransprüchen 6 oder 7 vorgeschlagen.

Hierdurch werden beim Ausrollen bzw. Anfahren des Fahrzeuges Verspannungen in der Kupplung vermieden, bzw. bei Anfahrvorgängen ein Durchdrehen der Räder verhindert.

Bei hoher Kupplungstemperatur, die durch sportliche Fahrweise oder unterschiedliche Radradien auftreten kann, muß die Energieaufnahme der Kupplung verringert werden, um weiteres Aufheizen zu vermeiden. Hierzu wird erfindungsgemäß vorgeschlagen, daß das Grundübertragungsmoment, bei Sensieren einer oberhalb eines vorzugebenden Grenzwertes liegenden Temperatur mit einem Temperaturfühler in der Kupplung, entsprechend gesenkt wird.

Liegen mehrere Ausnahmefahrsituationen gleichzeitig vor, so wird erfindungsgemäß vorgeschlagen eine Priorisierung der Abfragealgorithmen entsprechend der Reihenfolge der Ansprüche 3 bis 8 vorzunehmen. Führt einer der Abfragealgorithmen zu einer Veränderung des Grundübertragungsmomentes in der Kupplung nach Anspruch 1, so beginnt erneut die Abfrage der Algorithmen entsprechend der Reihenfolge der Ansprüche 3 bis 8. Führt keiner der Abfragealgorithmen zu einem von dem Grundübertragungsmoment nach Anspruch 1 abweichenden Übertragungsmoment, so wird das Grundübertragungsmoment nach Anspruch 1 eingestellt und der Abfragezyklus wiederholt. Durch diese Priorisierung wird die unterschiedliche Bedeutung der Ausnahmefahrsituationen berücksichtigt.

Aus Komfortgründen sollen Drehmomentsprünge vermieden werden. Dazu wird erfindungsgemäß vorgeschlagen, daß wenn die Abfrage eines Algorithmuses zum Verändern des Übertragungsmomentes führt, wird eine im Datenspeicher abgelegten Zeitrampe aufgerufen, nach der die Kupplung vollständig oder teilweise geöffnet bzw. geschlossen wird. Dadurch wird ein ruckartiges Öffnen bzw. Schließen der Kupplung vermieden.

Ein Ausführungsbeispiel für eine zu steuernde Kupplung ist in den Zeichnungen dargestellt und wird im folgenden näher beschrieben.

Es zeigen:

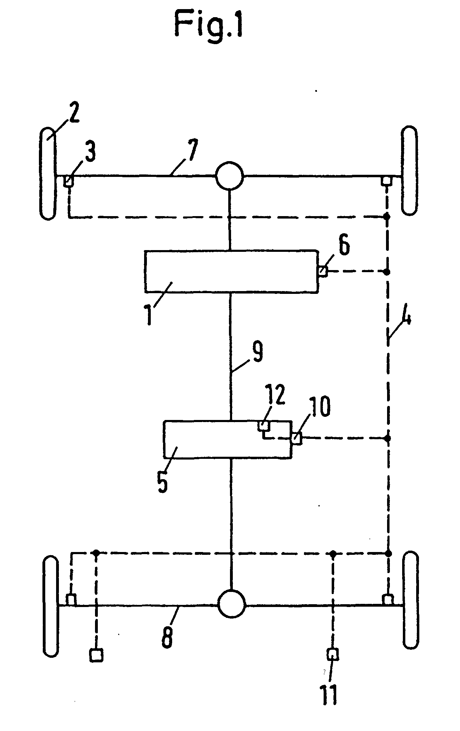

- Figur 1: Anordnung von Sensoren zur Steuerung einer steuerbaren Kupplung eines vierradgetriebenen Fahrzeuges;
- Figur 2: Abfragealgorithmus;
- Figur 3: zeitrampengesteuertes Öffnen und Schließen der Kupplung;

Das Kraftfahrzeug wird von dem Motor 1 über den Antriebsstrang 9, die Vorderachse 7 und die Hinterachse 8 angetrieben. Im Antriebsstrang 9 ist eine steuerbare Kupplung 5 eingebaut. Die Kupplung 5 ist mit einer Auswerteeinheit 10 mit Datenspeicher versehen. Die Auswerteeinheit 10 mit dem Datenspeicher verarbeitet, die über die Signalleitungen 4 übermittelten Signale des Motorsteuergerätes 6, des Bremslichtes 11, des Temperaturfühlers 12 und der den Rädern 2 zugeordneten Raddrehzahlsensoren 3. Die Kupplung 5 wird dann nach Abfragen der Abfragealgorithmen in der Auswerteeinheit 10 dem Datenspeicher über ein, hier nicht dargestelltes, Stellglied geschlossen bzw. geöffnet.

Die theoretische Drehzahldifferenz für den radschlupffreien Fahrbetrieb kann z. B. aus einer Kurvenradiusschätzung und anschließendem empirischen Rechengang oder durch Messung des Kurvenradiuses durch einen hier nicht dargestellten Lenkwinkelsensor, der Fahrgeschwindigkeit und den unterschiedlichen Radradien ermittelt werden. Mit dieser theoretischen Drehzahldifferenz wird dann die Kupplung derart gesteuert, daß ein konstantes Grundübertragungsmoment in Abhängigkeit von der theoretischen Drehzahldifferenz zwischen beiden Kupplungshälften gegeben ist.

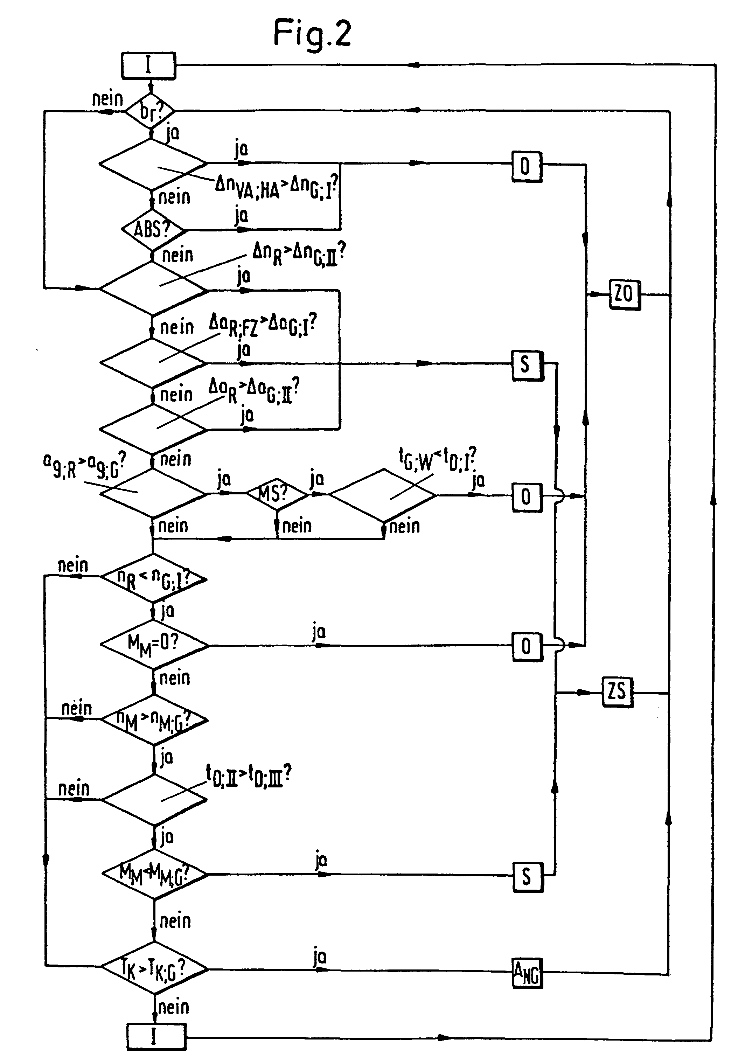

Figur 2 zeigt den Abfragealgorithmus. Wird eine Bremsbetätigung br sensiert und eine momentane Drehzahldifferenz Δn_{VA; HA} der gemittelten Drehzahlen der Räder 2 der Vorderachse 7 und der gemittelten Drehzahlen der Räder 2 der Hinterachse 8, die größer als ein vorzugebender Grenzwert Δn_{G; I} ist, oder es wird eine ABS-Bremsung ABS sensiert, so wird die Kupplung 5 vollständig oder teilweise geöffnet O. Durch das Öffnen der Kupplung 5 wird ein niedrigeres an die Ausnahmefahrsituation "Bremsung" angepaßtes Übertragungsmoment in der Kupplung 5 eingestellt. Die Sensierung der Bremsbetätigung br kann z. B: durch die Ermittlung eines Signals an das Bremslicht 11 erfolgen. Die Raddrehzahlen n_{R} werden mit den Raddrehzahlsensoren 3 ermittelt. Die Mittelung der Raddrehzahlen n_{R} der Vorderachse 7 und der Raddrehzahlen n_{R} der Hinterachse 8, und die Auswertung mit dem Abfragen des Abfragealgorithmuses erfolgt in der Auswerteeinheit 10 mit Datenspeicher. Führt die Abfrage des Algorithmuses nicht zu einem Öffnen der Kupplung 5, so wird weiterhin das Grundübertragungsmoment M_{G} des Zustandes I übertragen und der nächste Abfragealgorithmus aufgerufen. In dem nächsten Abfrageschritt wird gefragt, ob die Raddrehzahlsensoren 3 Drehzahldifferenzen Δn_{R} zwischen den einzelnen Rädern 2 sensieren, die größer als ein vorzugebender Grenzwert Δn_{G; II} sind. Wird die Frage mit ja beantwortet, so wird die Kupplung 5 ganz oder teilweise geschlossen S. Wird das Kriterium nicht erfüllt, so wird gefragt ob Beschleunigungsdifferenzen Δa_{R; FZ} zwischen der Beschleunigung der einzelnen Räder 2 und der Beschleunigung des Fahrzeuges vorliegen, die größer als ein vorzugebender Grenzwert Δ a_{G; I} sind. Liegt ein derartiger Fall vor, so wird die Kupplung 5 ebenfalls ganz oder teilweise geschlossen S. Trifft auch dieses Kriterium nicht zu, so wird in einem weiteren Abfrageschritt gefragt, ob Beschleunigungsdifferenzen Δa_{R} zwischen den Rädern vorliegen die größer als ein vorzugebender Grenzwert Δa_{G; II} sind. Wird die Frage mit ja beantwortet, wird die Kupplung ganz oder teilweise geschlossen S. Durch diese Abfrageschritte wird die Ausnahmefahrsituation "Durchdrehen der Räder" berücksichtigt. Trifft keines der o. g. Kriterien zu, so wird die nächste Abfragefolge zur Berücksichtigung der Ausnahmefahrsituation "Lastwechsel" abgefragt. Die Kupplung 5 wird vollständig oder teilweise geöffnet, wenn die Querbeschleunigung der einzelnen Räder a_{q; R} größer als ein vorzugebender Grenzwert a_{q; G} ist, und das Motorsteuergerät 6 sensiert, daß der Motor im Schiebebetrieb ist MS und die Zeitdauer seit dem Gaswegnehmen t_{G; W} eine vorgegebene Zeitdauer t_{D; I} überschreitet. Trifft keines der o. g. Kriterien zu, bleibt das Grundübertragungsmoment unverändert eingestellt und die nächste Abfragefolge, die die Ausnahmefahrsituationen "Ausrollen" bzw. "Anfahren" berücksichtigen, wird abgefragt. In dem ersten Abfrageschritt wird gefragt, ob die Raddrehzahlsensoren 3 Drehzahlen n_{R} der Räder 2 sensieren, die kleiner als ein vorgegebener Grenzwert n_{G; I} sind, oder mindestens ein Raddrahzahlsensor 3 kein Signal liefert. Liegt ein solcher Fall vor und das vom Fahrer angeforderte Motormoment M_{M} ist gleich Null, so wird die Kupplung vollständig oder teilweise geöffnet O. Ist das vom Fahrer angeforderte Motormoment M_{M} ungleich Null, so wird die Kupplung 5 geschlossen, wenn eine Motordrehzahl n_{M}, die größer als sein vorzugebender Grenzwert n_{M; G} ist, während einer Zeitdauer t_{D; II} die größer als eine vorgegebene Zeitdauer t_{D; III} ist sensiert wird und ein vom Fahrer angefordertes Motormoment M_{M}, das kleiner als ein vorgegebener Grenzwert M_{M; G} ist. Durch diese Abfragefolge wird die Ausnahmefahrsituation "Anfahren" berücksichtigt. Treffen diese Kriterien nicht zu, wird das Grundübertragungsmoment weiter beibehalten und in einem nächsten Abfrageschritt gefragt, ob durch einen in der Kupplung angeordneten Temperaturfühler 12 eine Temperatur T_{K} sensiert wird, die größer als ein vorgegebener Grenzwert T_{K; G} ist. Wird das Kriterium erfüllt, so wird ein angepaßtes Grundübertragungsmoment A_{GM} eingestellt. Die Temperatur T_{K} in der Kupplung 5 kann z. B: durch sportliche Fahrweise ansteigen. Durch das Einstellen des angepaßten Grundübertragungsmomentes A_{GM} wird ein weiteres Aufheizen der Kupplung 5 verhindert. Führt keiner der o. g. Abfragekriterien zu einem Verändern des Grundübertragungsmomentes M_{G}, so bleibt das Grundübertragungsmoment M_{G} unverändert eingestellt. Führt einer der o. a. Abfragealgorithmen zu einer Veränderung des Grundübertragungsmomentes, so wird das Schließen bzw. Öffnen der Kupplung 5 über die Zeitrampe "Kupplung schließen" ZS bzw. Zeitrampe "Kupplung öffnen" ZO ausgeführt. Anschließend beginnt der Abfragealgorithmus von neuem. Aufgrund der Reihenfolge der Abfragealgorithmen wird der unterschiedlichen Bedeutung der Ausnahmefahrsituation Rechnung getragen.

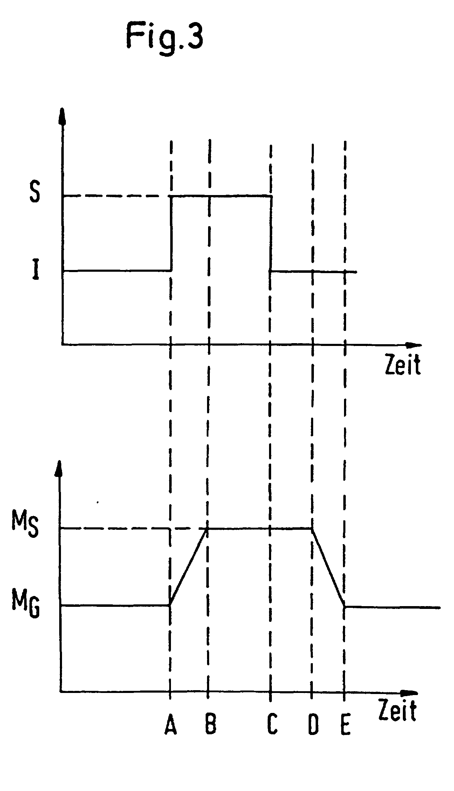

Figur 3 zeigt das Öffnen bzw. Schließen der Kupplung nach dem Aufruf der Zeitrampe Öffnen ZO bzw. Schließen ZS als Folge eines Befehls "Kupplung öffnen bzw. schließen" der Auswerteeinheit 10 mit Datenspeicher. Wird von der Auswerteeinheit 10 mit Datenspeicher eine Ausnahmefahrsituation mit der Veränderung des Grundübertragungsmomentes M_{G} als Folge, hier dargestellt der Befehl "Kupplung schließen" S, erkannt, Zeitpunkt A, dann wird eine in dem Datenspeicher abgelegte Zeitrampe "Kupplung schließen" ZS aufgerufen und ausgeführt A - B und endet mit dem Zustand "Kupplung geschlossen" S, bei dem das Übertragungsmoment M_{S} übertragen wird. Zum Zeitpunkt C wird von der Auswerteeintheit eine Veränderung der Fährsituation erkannt mit der Folge des Befehls "Kupplung öffnen" O. Das Übertragungsmoment wird während einer vorzugebenden Nachlaufzeit C - D noch beibehalten um ein unnötig häufiges Öffnen und Schließen der Kupplung zu vermeiden. Im Anschluß an die Nachlaufzeit zum Zeitpunkt D wird die Zeitrampe "Kupplung öffnen" ZO ausgeführt. Nach dem Ausführen der Zeitrampe ab dem Zeitpunkt E wird das neu eingestellte Übertragungsmoment, hier das Grundübertragungsmoment M_{G} übertragen.

### BEZUGSZEICHENLISTE

- 1: Motor
- 2: Rad
- 3: Raddrehzahlsensor
- 4: Signalleitung
- 5: Kupplung
- 6: Motorsteuergerät
- 7: Vorderachse
- 8: Hinterachse
- 9: Antriebsstrang
- 10: Auswerteeinheit mit Datenspeicher
- 11: Bremslicht
- 12: Temperaturfühler
- S: Schließen der Kupplung
- O: Öffnen der Kupplung
- A: Zeitpunkt an dem die Auswerteeinheit den Befehl zum Schließen der Kupplung gibt
- B: Zeitpunkt an dem die Kupplung nach Ausführen der Zeitrampe "Kupplung schließen" geschlossen ist
- C: Zeitpunkt an dem die Auswerteeinheit den Befehl zum Öffnen der Kupplung gibt und Beginn der Nachlaufzeit
- D: Ende der Nachlaufzeit und Beginn des Ausführens der Zeitrampe "Kupplung öffnen"
- E: Zeitpunkt ab dem die Kupplung nach Ausführen der Zeitrampe "Kupplung öffnen" wieder das Grundübertragungsmoment überträgt
- I: Kupplung in der Stellung zur Übertragung des Grundübertragungsmomentes
- ABS: ABS-Bremsung
- br: Bremsbetätigung
- Δn_{VA; HA}: Drehzahldifferenz zwischen der gemittelten Drehzahl der Räder der Vorderachse und der Räder der Hinterachse
- Δn_{G; I}: vorgegebener Grenzwert der Drehzahldifferenz zwischen der gemittelten Drehzahl der Räder der Vorderachse und der Räder der Hinterachse
- Δn_{R}: nicht durch Kurvenfahrt bedingte Drehzahldifferenz zwischen den Drehzahlen der Räder
- Δn_{G; II}: vorgegebener Grenzwert der nicht durch Kurvenfahrt bedingten Drehzahldifferenz zwischen den Drehzahlen der einzelnen Räder
- Δa_{R; FZ}: Beschleunigungsdifferenz zwischen der Beschleunigung der einzelnen Räder und der Beschleunigung des Fahrzeugs
- Δa_{G; I}: vorgegebener Grenzwert der Differenz zwischen den Beschleunigungen der einzelnen Räder und der Beschleunigung des Fahrzeugs
- Δa_{R}: Beschleunigungsdifferenz zwischen den Beschleunigungen der einzelnen Räder
- Δa_{G; II}: vorgegebener Grenzwert der Differenz zwischen den Beschleunigungen der einzelnen Räder
- n_{R}: Raddrehzahl
- n_{G; I}: vorgegebener Grenzwert der Raddrehzahlen
- a_{q; R}: Querbeschleunigung der Räder
- MS: Motor im Schiebebetrieb
- t_{G; W}: Zeitdauer seit dem Gaswegnehmen
- t_{D; I}: vorgegebene Zeitdauer nach dem Gaswegnehmen
- a_{q; G}: vorgegebener Grenzwert der Querbeschleunigung
- M_{M}: Motormoment
- t_{D; III}: vorgegebene Zeitdauer
- n_{M}: Motordrehzahl
- n_{M}; _{G}: vorgegebener Grenzwert der Motordrehzahlen
- M_{M; G}: vorgegebener Grenzwert des angeforderten Motormomentes
- t_{D; II}: Zeitdauer
- T_{K}: Temperatur in der Kupplung
- T_{K; G}: vorgegebener Grenzwert der Temperatur in der Kupplung
- A_{GM}: angepaßtes Grundübertragungsmoment
- ZO: Zeitrampe "Öffnen der Kupplung"
- ZS: Zeitrampe "Schließen der Kupplung"
- M_{G}: Grundübertragungsmoment
- M_{S}: Übertragungsmoment in der Stellung "Kupplung geschlossen"

## Patentansprüche

1. Verfahren zum Steuern einer steuerbaren Kupplung (5) im Antriebsstrang (9) zwischen einer Vorderachse (7) und einer Hinterachse (8) eines Fahrzeugs mit Vierradantrieb, bei dem jedem der Räder (2) ein Raddrehzahlsensor (3) zugeordnet ist, dessen Ausgangssignal einer Auswerteeinheit (10) mit einem Datenspeicher zugeführt wird, wobei eine für einen radschlupffreien Fahrbetrieb theoretische Drehzahldifferenz zwischen beiden Kupplungshälften berechnet wird, die in ein Steuersignal umgewandelt wird das die steuerbare Kupplung (5) so steuert, dass in der Kupplung (5) ein Grundübertragungsmoment als übertragungsmoment eingestellt wird, **dadurch gekennzeichnet, daß** ein in dem Datenspeicher der Auswerteeinheit (10) abgelegter Abfrage-algorithmus definierte Ausnahmefahrsituationen durch Über- oder Unterschreiten von Grenzwerten von Signalen sensiert, nämlich die Ausnahmefahrsituationen "Bremsbetätigung" "ABS-Bremsung" "Lastwechsel" "Ausrollen" "Anfahren "hohe Kupplungstemperatur", wobei ein aus dem Ergebnis des Abfragealgorithmus gebildetes Steuersignal zu einer Veränderung des eingestellten übertragungsmomentes führt.

2. Verfahren nach Anspruch 1, **dadurch gekennzeichnet, dass** bei
- Sensierung einer Bremsbetätigung (br) und
- Sensierung einer momentanen Drehzahldifferenz (Δn_{VA; HA}) der Räder (2) der Vorderachse (7) und der Räder (2) der Hinterachse (8), die größer als ein vorzugebender Grenzwert (Δn_{G; I}) ist
oder
- Ermittlung einer ABS-Bremsung (ABS) die Kupplung (5) vollständig oder teilweise geöffnet wird.

3. Verfahren nach Anspruch 1, **dadurch gekennzeichnet, dass** bei
- Sensierung einer nicht durch Kurvenfahrt bedingten Drehzahldifferenz (Δn_{R}) der einzelnen Räder (2), die größer als ein vorzugebender Grenzwert (Δn_{G; II}) ist
oder
- Sensierung einer Beschleunigungsdifferenz (Δa_{R; FZ}) zwischen der Beschleunigung der einzelnen Räder (2) und der Beschleunigung des Fahrzeuges, die größer als ein vorzugebender Grenzwert (Δa_{G; I}) ist
oder
- Sensierung einer Beschleunigungsdifferenz (Δa_{R}) der einzelnen Räder (2), die größer als ein vorzugebender Grenzwert (Δa_{G; II}) ist
die Kupplung (5) vollständig oder teilweise geschlossen wird.

4. Verfahren nach Anspruch 1, **dadurch gekennzeichnet, dass** bei
- Sensierung einer Querbeschleunigung (a_{q; R}) der Räder (2), die größer als ein vorzugebender Grenzwert (a_{q; G}) ist
und
- der Motor (1) im Schiebebetrieb (MS) ist
und
- die Zeitdauer (t_{G; w}) seit dem Gaswegnehmen kleiner als eine vorzugebende Zeitdauer (t_{D; I}) ist
die Kupplung (5) vollständig oder teilweise geöffnet wird.

5. Verfahren nach Anspruch 1, **dadurch gekennzeichnet, dass** bei
- einer Raddrehzahl (n_{R}) der Räder (2) die kleiner als ein vorzugebender Grenzwert (n_{G; I}) ist
und
- das vom Fahrer angeforderte Motorenmoment M_{M} gleich null ist
die Kupplung (5) vollständig oder teilweise geöffnet wird.

6. Verfahren nach Anspruch 1, **dadurch gekennzeichnet, dass** bei
- einer Raddrehzahl (n_{R}) der Räder (2), die kleiner als ein vorzugebender Grenzwert (n_{G; 1}) ist
und
- Sensierung einer Motordrehzahl (n_{M}), die größer als ein vorzugebender Grenzwert (n_{M; G}) ist, über eine Zeitdauer (t_{D; II}), die größer als eine vorzugebende Zeitdauer (t_{D; III}) ist
und
- Sensierung eines Motormomentes (M_{M}), das kleiner als ein vorzugebender Grenzwert (M_{M; G}) ist
die Kupplung (5) vollständig oder teilweise geschlossen wird.

7. Verfahren nach Anspruch 1, **dadurch gekennzeichnet, dass** bei Sensierung einer Temperatur (T_{K}) in der Kupplung (5), die größer als ein vorzugebender Grenzwert (T_{K; G}) ist, das Grundübertragungsmoment (M_{G}) in der Kupplung (5) gesenkt wird.

8. Verfahren nach Anspruch 1, **dadurch gekennzeichnet, dass** das Öffnen bzw. Schließen der Kupplung (5) nach Abfrage der Abfragealgorithmen in der Reihenfolge der Ansprüche 2 bis 7 erfolgt.

9. Verfahren nach Anspruch 1, **dadurch gekennzeichnet, dass** das Öffnen bzw. Schließen der Kupplung (5) zeitrampengesteuert erfolgt.

## Claims

1. Method for controlling a controllable clutch (5) in the drive train (9) between a front axle (7) and a rear axle (8) of a vehicle with four-wheel drive, in which each of the wheels (2) is assigned a wheel speed sensor (3) whose output signal is fed to an evaluation unit (10) with a data memory, wherein a theoretical rotational speed difference between two clutch halves for a travel mode which is free of wheel slip is calculated and converted into a control signal which controls the controllable clutch (5) in such a way that the basic transmission torque is set as transmission torque in the clutch (5), **characterized in that** an interrogation algorithm which is stored in the data memory of the evaluation unit (10) senses defined exceptional travel situations, specifically the exceptional situations of "activation of the brakes", "ABS braking", "load change", "coasting", "driving off" and "high clutch temperature" as a result of limiting values of signals being exceeded or undershot, wherein a control signal which is formed from the result of the interrogation signal leads to a change in the set transmission torque.

2. Method according to Claim 1, **characterized in that** the clutch (5) is completely or partially opened when
- a brake activation (br) is sensed
and
- an instantaneous difference (Δn_{VA; HA}) in rotational speed between the wheels (2) of the front axle (7) and the wheels (2) of the rear axle (8) which is greater than a limiting value (Δn_{G; I}) to be predefined is sensed,
or
- an ABS braking operation (ABS) is detected.

3. Method according to Claim 1, **characterized in that** the clutch (5) is completely or partially closed when
- a rotational speed difference (Δn_{R}), due to cornering, between the individual wheels (2) which is greater than a limiting value (Δn_{G; II}) to be predefined is sensed,
or
- a difference (Δa_{R; FZ}) in acceleration between the acceleration of the individual wheels (2) and the acceleration of the vehicle which is greater than a limiting value (Δa_{G; I}) to be predefined is sensed,
or
- a difference (Δa_{R}) in acceleration between the individual wheels (2) which is greater than a limiting value (Δa_{G; II}) to be predefined is sensed.

4. Method according to Claim 1, **characterized in that** the clutch (5) is opened completely or partially when
- a lateral acceleration (a_{q; R}) between the wheels (2) which is greater than a limiting value (a_{q; G}) to be predefined is sensed,
and
- the engine (1) is in the overrun mode (MS),
and
- the time period (t_{G; W}) sense the throttle was closed is less than a time period (t_{D; I}) to be predefined.

5. Method according to Claim 1, **characterized in that** the clutch (5) is opened completely or partially
- at a wheel speed (n_{R}) of the wheels (2) which is less than a limiting value (n_{G; I}) to be predefined,
and
- when the engine torque M_{M} which is requested by the driver is equal to zero.

6. Method according to Claim 1, **characterized in that** the clutch (5) is closed completely or partially at
- a wheel speed (n_{R}) of the wheels (2) which is less than a limiting value (n_{G; I}) to be predefined,
and
- when an engine speed (n_{M}) which is greater than a limiting value (n_{M; G}) to be predefined is sensed over a time period (t_{D; II}) which is longer than a time period (t_{D; III}) to be predefined,
and
- when an engine torque (M_{M}) which is lower than a limiting value (M_{M, G}) to be predefined is sensed.

7. Method according to Claim 1, **characterized in that** when a temperature (T_{K}) in the clutch (5) which is higher than a limiting value (T_{K; G}) to be predefined is sensed, the basic transmission torque (M_{G}) in the clutch (5) is reduced.

8. Method according to Claim 1, **characterized in that** the clutch (5) is opened or closed after interrogation by the interrogation algorithms in the order in Claims 2 to 7.

9. Method according to Claim 1, **characterized in that** the clutch (5) is opened and closed under control by time ramps.

## Revendications

1. Procédé de commande d'un embrayage commandable (5) dans la chaîne de transmission (9) entre un essieu avant (7) et un essieu arrière (8) d'un véhicule à quatre roues motrices, dans lequel on associe à chacune des roues (2) un capteur de vitesse de roue (3), dont le signal de départ est envoyé à une unité d'analyse (10) comprenant une mémoire de données, une différence de vitesse théorique entre les deux moitiés d'embrayage étant calculée pour un mode de conduite sans patinage des roues, cette différence de vitesse étant convertie en un signal de commande qui commande l'embrayage commandable (5) de telle sorte qu'un couple de transfert de base soit ajusté en tant que couple de transfert dans l'embrayage (5), **caractérisé en ce qu'**un algorithme d'interrogation stocké dans la mémoire de données de l'unité d'analyse (10) détecte une situation de conduite exceptionnelle définie par le dépassement par le haut ou par le bas de valeurs limites de signaux, à savoir les situations de conduite exceptionnelles "actionnement des freins", "freinage ABS", "changement de charge", "avance en roue libre", "démarrage", "haute température d'embrayage", dans lesquelles un signal de commande formé par le résultat de l'algorithme d'interrogation conduit à une modification du couple de transfert ajusté.

2. Procédé selon la revendication 1, **caractérisé en ce que**, dans le cas
- d'une détection de l'actionnement des freins (br) et
- d'une détection d'une différence de vitesse momentanée (Δn_{VA;HA}) des roues (2) de l'essieu avant (7) et des roues (2) de l'essieu arrière (8), qui est supérieure à une valeur limite à prédéfinir (Δn_{G; I}) ou
- de la détection d'un freinage ABS (ABS),
l'embrayage (5) est ouvert complètement ou partiellement.

3. Procédé selon la revendication 1, **caractérisé en ce que** dans le cas
- d'une détection d'une différence de vitesse (Δn_{R}) des roues individuelles (2) non provoquée par une conduite en virage, qui est supérieure à une valeur limite à prédéfinir (Δn_{G; II}),
ou
- d'une détection d'une différence d'accélération (Δa_{R; FZ}) entre l'accélération des roues individuelles (2) et l'accélération du véhicule, qui est supérieure à une valeur limite à prédéfinir (Δa_{G;I}), ou
- d'une détection d'une différence d'accélération (Δa_{R}) des roues individuelles (2) qui est supérieure à une valeur limite à prédéfinir (Δa_{G;II)} ,
l'embrayage (5) est complètement ou partiellement fermé.

4. Procédé selon la revendication 1, **caractérisé en ce que** dans le cas
- d'une détection d'une accélération transversale (a_{q;R}) des roues (2), qui est supérieure à une valeur limite à prédéfinir (a_{q;G})
et
- où le moteur (1) est en mode de poussée (M_{S})
et
- où la durée (t_{G;W}) depuis la levée de la pédale d'accélération est inférieure à une durée à prédéfinir (t_{D;I}), l'embrayage (5) est complètement ou partiellement ouvert.

5. Procédé selon la revendication 1, **caractérisé en ce que** dans le cas
- d'une vitesse des roues (n_{R}) des roues (2) qui est inférieure à une valeur limite à prédéfinir (n_{G;I})
et
- où le couple moteur M_{M} exigé par le conducteur est nul,
l'embrayage (5) est complètement ou partiellement ouvert.

6. Procédé selon la revendication 1, **caractérisé en ce que** dans le cas
- où une vitesse des roues (n_{R}) des roues (2) est inférieure à une valeur limite à prédéfinir (n_{G;I})
et
- d'une détection d'une vitesse du moteur (n_{M}) qui est supérieure à une valeur limite à prédéfinir (n_{M;G}), sur une durée (t_{D;II}) qui est supérieure à une durée à prédéfinir (t_{D;III}),
et
- d'une détection d'un couple moteur (M_{M}) qui est inférieure à une valeur limite (M_{M;G}) l'embrayage (5) est complètement ou partiellement fermé.

7. Procédé selon la revendication 1, **caractérisé en ce que** dans le cas d'une détection d'une température (T_{K}) dans l'embrayage (5), qui est supérieure à une valeur limite (T_{K;G}) à prédéfinir, le couple de transfert de base (M_{G}) dans l'embrayage (5) est abaissé.

8. Procédé selon la revendication 1, **caractérisé en ce que** l'ouverture ou la fermeture de l'embrayage (5) s'effectue après l'interrogation des algorithmes d'interrogation dans l'ordre des revendications 2 à 7.

9. Procédé selon la revendication 1, **caractérisé en ce que** l'ouverture ou la fermeture de l'embrayage (5) s'effectue par commande par rampe temporelle.
